# EUROPEAN PATENT SPECIFICATION

(11) **EP 0 546 641 B1**
(45) Date of publication and mention of the grant of the patent: **31.07.1996**
(21) Application number: 92203871.6
(22) Date of filing: 10.12.1992
(51) Int. Cl.: A23C 19/05, A23C 9/142

(54) **Process for the preparation of raw milk cheese**
Verfahren zur Herstellung von Rohmilchkäse
Procédé de préparation de fromage au laut cru

(30) Priority: 10.12.1991 NL 9102061
(43) Date of publication of application: 16.06.1993
(73) Proprietor: FRIESLAND (FRICO-DOMO) COOPERATIEVE B.A., NL-8938 AN Leeuwarden (NL)
(72) Inventor: Zoon, Petronella, NL-6708 NA Wageningen (NL); Hup, Gerhard, NL-8921 TX Leeuwarden (NL)
(74) Representative: Smulders, Theodorus A.H.J., Ir.

(56) References cited:
- WO-A-86/01687
- US-A- 4 344 970
- DATABASE WPIL Section Ch, Week 8717, Derwent Publications Ltd., London, GB; Class D16, AN 87-120646
- MILCHWISSENSCHAFT. vol. 42, no. 4, 1987, MUNCHEN DE pages 226 - 231 D.JOHNSTON ET AL. 'Manufacture of Cheddar cheese from thermized cold-stored milk'
- LE LAIT vol. 61, 1981, pages 435 - 457 S.BERNARD ET AL. 'Ultrafiltration -thermisation du lait à la production : aspects bactériologiques'
- JOURNAL OF DAIRY SCIENCE. vol. 68, no. 9, 1985, CHAPAIGN, ILLINOIS US pages 2403 - 2410 F. KOSIKOWSKI 'Ultrafiltration of milk on French farms and in the making of a new specialty cheese industry'

## Description

This invention relates to a process for the preparation of raw milk cheese, using milk, which may or may not be partly or wholly skimmed, that has undergone no heat treatment or only one non-pasteurizing heat treatment.

Cheese which is prepared using milk so obtained, is generally referred to as raw milk cheese. Raw milk cheese is distinguished from cheese prepared from pasteurized milk by a fuller flavour and a more aromatic character, owing to the fact that the substances in the milk that are essential to the cheese making process have not been exposed to higher temperatures and therefore have substantially retained their natural character.

A problem in preparing such cheese is that both in the production of the milk and in the subsequent processing thereof, particular steps must be taken to prevent undesired bacterial growth. In practice, however, it appears that in spite of all care taken when the milk-producing animal is fed, the milk is obtained and processed further, it is difficult to prepare cheese of constant quality or ripen the cheese formed while maintaining a desired quality.

In this connection, it is in particular the presence of bacteria of the coli-aerogenes group that has a direct and adverse influence on the cheese. These bacteria can ferment lactose while forming carbon dioxide and hydrogen, and the formation of this gas has an extremely adverse influence on the quality of the cheese.

Another problem is the possible presence in the milk of non-sporing pathogenic bacteria, such as the tubercle and typhoid bacilli, Brucella abortus, pathogenic streptococci and staphylococci. These bacteria are killed only with a proper pasteurization. Pasteurization, however, is a treatment which cannot be used in the preparation of raw milk cheese. As a consequence, it happens regularly that quantities of milk for the preparation of cheese of the type referred to must be rejected, which gives rise to production loss.

The object of the invention is to provide a process for the preparation of cheese of the raw milk type, in which the cheese milk is so treated that it retains its natural character, whilst the risk of the presence of harmful pathogenic bacteria therein is not greater than in milk which has been pasteurized in the conventional manner.

According to the invention, the milk is separated into a permeate and a retentate using a microfiltering treatment, whereafter the retentate is subjected to a mild pasteurisation, such that the phosphatase reaction therein has just become negative, whereafter the retentate so treated is mixed with the permeate, optionally, for setting the fat content, cream which may or may not be pasteurized is added, and cheese is prepared in an otherwise conventional manner.

Surprisingly, it has been found that cheese prepared by the process according to the invention does not contain any pathogenic bacteria at all, nor do any bacteria appear to be present that have a negative influence on the quality of the cheese in any other respect. Organoleptically, cheese thus obtained proves to have the characteristic taste that is typical of cheese which has been prepared from milk which has not been subjected to any treatment at all.

According to the invention, it has further been found that when prior to the cheese preparation mesophilic lactobacilli are added to the treated milk, the aroma of the cheese obtained can be varied, depending on the specific choice of lactobacilli.

According to Dutch government regulations, milk from which raw milk cheese is prepared must possess a phosphatase activity that is normal for raw material. The milk obtained by the process according to the invention satisfies this criterion.

This phosphatase activity, as well as the absence thereof in the retentate treated in accordance with the invention, can be determined in a simple manner, for instance in a mannner as described in IDF Standard 82A: 1987.

It is noted that European patent specification 0 194 286 discloses a process in which milk is subjected to a microfiltration treatment and the retentate obtained is sterilized and added to the permeate. The preparation of raw milk cheese is neither described nor suggested in this publication.

The invention is illustrated in and by the following examples.

### Example 1

Cooled raw bulk milk was heated to 49°C and skimmed. The cream was pasteurized at 74°C for 10 seconds and then cooled.

The skim milk was cooled to 2°C and subsequently microfiltered. This occurred in a continuous process in a filtration unit with a ceramic membrane (Ceraver) of 0.2 m² having an average pore size of 0.8 µm. 200 liters of skim milk were heated to 48-50°C and via a buffer vat the milk was pumped into the filtration unit. The retentate outlet was kept closed until the desired concentration factor had been achieved. Then the retentate discharge was initiated. The concentration factor (Kf) was controlled by regulating the discharge of the retentate. The Kf was 7. During microfiltration, the temperature was maintained at 48°C. The circulation flow was 6.5 m³/h and the output transmembrane pressure was 0.3 bar.

The discharged permeate and retentate were cooled in line to approximately 5°C. The retentate was pasteurized at 74°C for 10 seconds and cooled to 4°C.

For the benefit of the cheese preparation, the permeate and pasteurized retentate were put together in the original proportion and pasteurized cream was added to adjust to a fat content equal to the protein content of the milk. 200 liters of this standardized milk were pumped into the cheese vessel and adjusted to renneting temperature using warm water in the double wall of the cheese vessel. After addition of 1.6 liter of starter, 80 g of a 33% CaCl₂ solution, 150 g of 41% NaNO₃ solution and 46 g of rennet, cheese was prepared in the conventional manner in 10 kg moulds. The cheese was salted for 3 days and then ripened at 14°C for 3 months.

The cheese was tested with regard to odour and flavour by a panel of five cheese tasters comparing it with a cheese which had been prepared from raw milk in the traditional manner. The test cheese had the characteristic taste that is typical of cheese prepared from raw milk.

### Example 2

Raw milk was skimmed and the cream was pasteurized as in Example 1. 800 liters of raw skim milk were then microfiltered in a filtration unit equipped with a ceramic membrane (Ceraver) having an average pore size of 0.8 µm and a membrane surface area of 3.8 m². Microfiltration occurrred at a temperature of 48°C. The circulation flow was 110 m³/h at a constant transmembrane pressure up to Kf = 7. The retentate was pasteurized at 74°C for 10 seconds. The permeate and retentate were mixed in the original proportion and pasteurized cream was added until a concentration equal to that of the protein in the milk was achieved. With this standardized milk, cheese was made in an 800-liter cheese vessel as in Example 1. The cheese was ripened and tested in a similar manner. The test results were equal to those in Example 1.

### Example 3

Raw skim milk was microfiltered as in Example 2 and standardized in the manner specified there. Prior to the preparation of the cheese, a mixed culture of mesophilic lactobacilli was added to the milk.

This mixed culture of mesophilic lactobacilli was obtained in the following manner:

From ripened raw milk cheese of a very good flavour, lactobacilli strains were isolated by seeding dilutions of the cheese in a specific nutrient medium for mesophilic lactobacilli (Rogosa agar) and, after incubation, inoculating loose colonies and culturing them purely in a conventional manner. Full-grown pure cultures were put together in proportional amounts, diluted with a tenfold amount of sterilized milk and stored until use at -40°C.

After defrosting, an amount of mixed culture was added to the cheese milk, such that a concentration of 50-500 lactobacilli per ml of milk cheese was obtained.

The cheese was prepared, ripened and turned as in Example 2.

The cheese prepared and ripened in this manner possessed, in addition to the flavour that is typical of cheese prepared from raw milk, a pungent taste which is appreciated by consumers of raw milk cheese.

## Claims

1. A process for the preparation of cheese, using milk, which may or may not be partly or wholly skimmed, that has undergone no heat treatment or only one non-pasteurizing heat treatment, wherein the milk is separated into a permeate and a retentate using a microfiltering treatment, whereafter the retentate is subjected to a mild pasteurisation, such that the phosphatase reaction therein has just become negative, whereafter the retentate so treated is mixed with the permeate, optionally, for setting the fat content, cream which may or may not be pasteurized is added, and cheese is prepared in an otherwise conventional manner.

2. A process according to claim 1 wherein prior to the preparation of cheese, mesophilic lactobacilli are added to the treated milk.

## Patentansprüche

1. Verfahren zur Herstellung von Käse unter Anwendung von gegebenenfalls ganz oder teilweise entrahmter Milch, die keine oder nur eine nicht-pasteurisierende Wärmebehandlung erfahren hat, wobei die Milch unter Anwendung einer mikrofiltrierenden Behandlung in ein Permeat und ein Retentat getrennt wird, worauf das Retentat einer derart milden Pasteurisation unterzogen wird, daß die Phosphatasereaktion darin gerade negativ geworden ist, worauf das so behandelte Retentat mit dem Permeat vermischt wird, falls erwünscht, zur Einstellung des Fettgehaltes, gegebenenfalls pasteurisierter Rahm zugesetzt wird, und in übrigens üblicher Weise Käse hergestellt wird.

2. Verfahren nach Anspruch 1, wobei vor der Herstellung von Käse der behandelten Milch mesophile Laktobazillen zugesetzt werden.

## Revendications

1. Procédé de préparation de fromage à base de lait qui peut être ou non semi-écrémé ou écrémé, qui n'a subi aucun traitement thermique ou seulement un traitement thermique non pasteurisant, dans lequel le lait a été séparé en un produit de perméation et un produit de rétention en utilisant un traitement de microfiltration, après quoi le produit de rétention est soumis à une pasteurisation légère si bien que la réaction de la phosphatase qu'il contient vient de devenir négative, après quoi le produit de rétention ainsi traité est mélangé avec le produit de perméation à titre optionnel pour régler la teneur en graisse, la crème qui peut ou non avoir été pasteurisée est ajoutée et le fromage est préparé d'une manière pour le reste classique.

2. Procédé selon la revendication 1, dans lequel, avant la préparation de fromage, des lactobacilles mésophiles sont ajoutés au lait traité.
